# EUROPÄISCHE PATENTANMELDUNG

(11) **EP 2 174 742 A1**
(43) Veröffentlichungstag der Anmeldung: **14.04.2010**
(21) Anmeldenummer: 09011523.9
(22) Anmeldetag: 09.09.2009
(51) Int. Cl.: B23K 10/00, B23K 26/38, B23K 26/42, B23K 37/02, B23K 26/08, B23Q 1/54, B24C 1/04, B25J 17/02, B26F 3/00

(54) **Schneidvorrichtung mit wenigsten zwei unabhängig voneinander betätigbaren Stellantriebe**

(30) Priorität: 22.11.2008 DE 102008058644; 10.10.2008 DE 102008050939
(71) Anmelder: Num Industry Alliance AG, 9053 Teufen (CH)
(72) Erfinder: Halser, Peter, 9014 St. Gallen (CH)
(74) Vertreter: Maucher, Wolfgang

(57) **Zusammenfassung**

Bei einer Schneidvorrichtung (1) ist ein Schneidkopf (2) in einer Gelenkaufhängung (10) mit zwei gekreuzten oder windschiefen Drehachsen (4) und (5) verschwenkbar aufgehängt. An den Schneidkopf (2) greifen über Gestänge (13) und (14) zwei Stellantriebe (6) und (7) an, die entlang von vorzugsweise horizontal oder vertikal oder schräg ausgerichteten linearen Achsen (8) und (9) verfahrbar sind. Durch die linearen Verstellbewegungen der Stellantriebe (6) und (7) sind die Verschwenkbewegungen um die Achsen (4) und (5) ausführbar und ansteuerbar. Der Schneidkopf (2) hat Mittel (19) zum Plasmaschneiden und/oder Laserschneiden und/oder Wasserstrahlschneiden und/oder mechanischem Schneiden.

## Beschreibung

Die Erfindung betrifft eine Schneidvorrichtung, insbesondere zum Schneiden von Werkstücken, mit einem innerhalb eines Raumwinkelbereichs frei verschwenkbaren Schneidkopf und einer Stelleinrichtung, mit welcher die Ausrichtung der Arbeitsrichtung des Schneidkopfes innerhalb des Raumwinkelbereichs einstellbar ist.

Die Erfindung betrifft weiter ein Verfahren zur Ansteuerung einer derartigen Schneidvorrichtung.

Derartige Schneidvorrichtungen sind bekannt und haben sich zur Fertigung beliebiger "zweidimensionaler", flächiger und/oder dreidimensionaler Werkstücke bewährt. Es ist hierbei üblich, die Beweglichkeit des Schneidkopfes innerhalb des Raumwinkelbereichs durch rotatorische Antriebe zu bewirken, mit denen Drehbewegungen um zwei unabhängige, insbesondere rechtwinklig zueinander angeordnete Drehachsen ausführbar sind. Diese Drehbewegungen sind zu beliebigen Bewegungen zusammensetzbar, um ein beliebiges Verschwenken des Schneidkopfes innerhalb des Raumwinkelbereichs zu ermöglichen. Konstruktiv einfache Schneidvorrichtungen ergeben sich, wenn die Antriebe die Achsen der Drehbewegungen direkt antreiben.

Der Erfindung liegt die Aufgabe zugrunde, eine Schneidvorrichtung bereitzustellen, die schnelle Bewegungen des Schneidkopfes ermöglicht.

Zur Lösung dieser Aufgabe ist bei einer Schneidvorrichtung der eingangs genannten Art vorgesehen, dass der Schneidkopf verschwenkbar aufgehängt ist, wobei das Verschwenken um zwei gekreuzt oder windschief zueinander verlaufende Achsen ausführbar ist, und dass die Stelleinrichtung wenigstens zwei unabhängig voneinander betätigbare Stellantriebe aufweist, die jeweils entlang einer linearen Achse verfahrbar sind und die jeweils an dem Schneidkopf zur Verschwenkung des Schneidkopfes angreifen.

Unter einer linearen Achse wird in dieser Schrift eine eindimensionale Führung der Bewegung verstanden, die gebogen oder geradlinig ausgeführt sein kann. Von Vorteil ist bei der Erfindung, dass auf rotatorische Antriebe verzichtet werden kann, was die Anforderungen an die Stabilität und Belastbarkeit der Kabelzuführungen für die Antriebe günstiger und weniger aufwändig gestaltet. Windschief sind zwei Achsen, die nicht zueinander parallel ausgerichtet sind und deren Verlängerungen sich nicht schneiden. Durch die Umsetzung von Schwenkbewegungen des Schneidkopfes in lineare Bewegungen entlang der linearen Achse wird vorteilhaft erreicht, dass die Bewegungen in unterschiedlichen Freiheitsgraden oder Richtungen voneinander konstruktiv einfach entkoppelt werden können. Hierdurch ist ein Mitbewegen eines Antriebs für eine Bewegungsrichtung durch die Bewegung eines zweiten Antriebs für eine weitere Bewegungsrichtung, wie dies beispielsweise bei direkten rotatorischen Antrieben um zwei Drehachsen zwingend erforderlich ist, vermeidbar. Die Beweglichkeit des Schneidkopfes ist somit weniger träge, da geringere Massen mitbewegt werden müssen, was zur Verringerung von Trägheitsmomenten führt.

Bei einer vorteilhaften Ausgestaltung der Erfindung kann vorgesehen sein, dass der Schneidkopf in einem klassischen bzw. in einem gewöhnlichen Gelenk, beispielsweise in einer Kardanaufhängung, aufgehängt ist. Von Vorteil ist dabei, dass eine einfache Führung der Bewegungen des Schneidkopfes ermöglicht ist. Insbesondere die Verwendung einer Kardanaufhängung stellt die für die Bewegung des Schneidkopfes erforderliche Bewegungsfreiheit bereit. Es sind jedoch auch Abwandlungen der Kardanaufhängung, die ein Verschwenken um zwei Achsen zulassen, oder beispielsweise eine Aufhängung mit einem Kugelgelenk mit Vorteil verwendbar.

Durch die Anordnung der Verschwenkachsen kann ein Gelenk, das nur genau zwei unabhängige Bewegungs-Freiheitsgrade aufweist, verwendet werden, wodurch die Schneidvorrichtung mit genau zwei unabhängig voneinander betätigbaren Stellantrieben auskommen kann, um beliebige Schwenkausrichtungen des Schneidkopfes innerhalb eines zugänglichen Raumwinkels einstellen zu können.

Bei einer vorteilhaften Ausgestaltung der Erfindung kann vorgesehen sein, dass die linearen Achsen geradlinig verlaufen. Günstig ist dabei, dass sowohl der Antrieb der Stelleinrichtungen als auch die Führung und Steuerung entlang einer linearen Achse besonders einfach ausführbar sind. Auch kann dadurch die Belastung der Führungselemente und somit der Materialverschleiß gering gehalten oder minimiert werden.

Ein geringer Platzbedarf der Schneidvorrichtung ergibt sich, wenn die linearen Achsen der Stellantriebe zueinander parallel, insbesondere fluchtend oder nebeneinander, und/oder schräg zueinander ausgerichtet sind.

Beispielsweise kann hierzu vorgesehen sein, dass die linearen Achsen in einer gemeinsamen Ebene angeordnet sind und so diese Ebene beschreiben.

Zum Betrieb der Schneidvorrichtung kann vorgesehen sein, dass die durch die Achsen der Aufhängung des Schneidkopfes beschriebene Ebene in Gebrauchsstellung der Schneidvorrichtung horizontal ausgerichtet ist. Die Schneidvorrichtung kann jedoch auch in anderen Orientierungen verwendet werden, wobei die durch die Achsen der Aufhängung des Schneidkopfes beschriebene Ebene vorzugsweise parallel zu eine Arbeits-und/oder Aufnahme- und/oder Auflagefläche für ein mit dem Schneidkopf zu bearbeitendes Werkstück ausgerichtet ist.

Die linearen Achsen können beispielsweise horizontal ausgerichtet sein. Eine möglichst kleine Aufstellfläche für die Schneidvorrichtung wird jedoch erreicht, wenn die linearen Achsen in Gebrauchsstellung der Schneidvorrichtung mit einer Horizontalebene jeweils einen Winkel einschließen. Vorzugsweise kann vorgesehen sein, dass die linearen Achsen in Gebrauchsstellung der Schneidvorrichtung vertikal ausgerichtet sind. Die linearen Achsen schließen somit einen rechten Winkel mit einer Horizontalebene ein.

Beispielsweise kann vorgesehen sein, dass die linearen Achsen in einem spitzen Winkel oder parallel zu der Arbeitsrichtung des Schneidkopfes in dessen Mittelstellung bezüglich der Verschwenkbarkeit ausgerichtet sind und/oder dass die linearen Achsen in einem spitzen Winkel oder parallel zu der Mittelachse des Raumwinkelbereichs ausgerichtet sind.

Eine Schneidvorrichtung mit geringem Platzbedarf ergibt sich, wenn der Schneidkopf in einer vorzugsweise gabelförmigen Aufnahme aufgehängt ist, welche gegenüber der durch die linearen Achsen beschriebenen Ebene in einem Winkel, vorzugsweise in einem rechten Winkel, absteht. Der Aufhängungspunkt des Schneidkopfes ist somit seitlich versetzt gegenüber den Verstellwegen der Stellantriebe, wodurch vorteilhafte geometrische Verhältnisse erreicht werden.

Zur Ausführung der Stellbewegung an der Stelleinrichtung, durch welche die Ausrichtung des Schneidkopfes bestimmt wird, kann vorgesehen sein, dass jeder Stellantrieb einen entlang der linearen Achse verfahrbaren Schlitten aufweist.

Gemäß einer konstruktiv robusten und einfachen Ausführungsform kann vorgesehen sein, dass jeder Schlitten über ein Gestänge mit dem Schneidkopf gelenkig verbunden ist. Die Ausbildung von am Schneidkopf und den Schlitten angelenkten Gestängen ermöglicht die erforderliche Beweglichkeit des Schneidkopfes und bewirkt gleichzeitig eine definierte Ausrichtung des Schneidkopfes durch die Stelleinrichtungen.

Vorzugsweise sind die Gestänge als passive Gestänge ausgebildet, wobei unter einem passiven Gestänge ein längenfestes Gestänge mit vorgegebener Länge verstanden wird, dessen Länge im Betrieb unveränderlich ist.

Bei einer vorteilhaften Ausgestaltung der Erfindung kann vorgesehen sein, dass die Stellantriebe jeweils einen elektrischen Antrieb aufweisen. Die Stellantriebe sind somit schnell und präzise verfahrbar, und die Ausrichtung des Schneidkopfes ist somit schnell und präzise maschinell beliebig einstellbar. Von Vorteil ist weiter, dass die elektrischen Antriebe über Kabel mit fest fixierter Kabelführung versorgbar sind, da die einzelnen Achsen voneinander entkoppelbar sind. Hierdurch werden Kabelbrüche, die sich aus einer dauerhaften mechanischen Belastung aufgrund der Mitbewegung von Antrieben ergeben, vermieden.

Bei einer vorteilhaften Ausgestaltung der Erfindung kann vorgesehen sein, dass der Schneidkopf wenigstens ein Mittel zum Plasmaschneiden, Laserschneiden, Wasserstrahlschneiden und/oder mechanischen Schneiden aufweist. Der Schneidkopf ist somit zur Ausführung eines der genannten Trennverfahren oder zur Ausführung einer Kombination dieser Trennverfahren eingerichtet. Für diese Kombination können zwei, drei oder mehr Mittel der genannten Verfahren im Schneidkopf integriert sein.

Bei einer vorteilhaften Ausgestaltung der Erfindung kann vorgesehen sein, dass eine Steuereinheit vorhanden ist, die zur Berechnung einer Verfahrposition der Stelleinrichtung für eine vorgegebene Winkelausrichtung des Schneidkopfes innerhalb des Raumwinkelbereichs ausgebildet ist. Somit ist die Stelleinrichtung und damit die Arbeitsrichtung des Schneidkopfes elektronisch und automatisiert ansteuerbar. Die Arbeitsrichtung des Schneidkopfes ist durch die Orientierung des beim Trenn- oder Schneidverfahren aktiven Mittels, also beispielsweise des Austritts des Laser-, Plasma- bzw. Wasserstrahls oder der mechanischen Schneide, in Bezug auf die Verschwenkungsachsen oder die Spitze des Öffnungswinkels des Raumwinkelbereichs gegeben.

Bei einer vorteilhaften Ausgestaltung der Erfindung kann vorgesehen sein, dass der Öffnungswinkel des Raumwinkelbereichs wenigstens 90° beträgt. Vorzugsweise ist der Öffnungswinkel zu 94° oder 96° oder sogar größer gewählt. Der Öffnungswinkel kann beispielsweise durch den verfügbaren Verfahrweg der Stellantriebe oder die Geometrie der Aufhängung gegeben sein.

Bei einer vorteilhaften Ausgestaltung der Erfindung kann vorgesehen sein, dass der Schneidkopf in Ruheposition in der Mittelachse des Öffnungswinkels angeordnet ist. Somit ist der Schneidkopf mit seiner Arbeitsrichtung aus der durch die Mittelachse des Öffnungswinkels gegebenen Ruheposition symmetrisch in beide Richtungen um den gleichen Winkelbetrag auslenkbar, und dies in jeder durch die Mittelachse verlaufenden gedachten Ebene. Es sind somit abgesehen von der Größe des Öffnungswinkels keine Einschränkungen an die Arbeitsrichtung des Schneidkopfes gegeben, und es sind Werkstücke mit praktisch beliebiger Formgebung fertigbar. Vorzugsweise verlaufen die Achsen der Aufhängung senkrecht zu der gedachten Mittelachse des Raumwinkelbereichs. Ist die Aufhängung nach Art einer Kardanaufhängung oder allgemein mit zwei Verschwenkungsachsen ausgebildet, so stehen die Achsen der Aufhängung vorzugsweise senkrecht aufeinander.

Bei einer vorteilhaften Ausgestaltung der Erfindung kann vorgesehen sein, dass ein Verschwenken des Schneidkopfes um eine erste Achse der Aufhängung des Schneidkopfes durch gegenläufiges Verfahren der Stellantriebe ausführbar ist. Somit ist eine Elementarbewegung des Schneidkopfes durch eine steuerungstechnisch einfach beherrschbare Bewegung der Stellantriebe ausführbar. Von Vorteil ist weiter, dass sich die Rückstöße beim Verfahren der Stellantriebe bei einem gegenläufigen Verfahren der Stellantriebe zumindest teilweise kompensieren. Bei dem gegenläufigen Verfahren kann ein Stellantrieb in einem Zeitabschnitt um einen Verstellweg verfahren werden, der betragsmäßig verschieden ist von dem Verstellweg des anderen Stellantriebs in diesem Zeitabschnitt und in die entgegengesetzte Richtung gerichtet ist, die Stellantriebe können also um betragsmäßig unterschiedliche Verstellwege verfahren werden, um eine gewünschte Verschwenkbewegung des Schneidkopfes zu bewirken. Bei dem gegenläufigen Verfahren können die Stellantriebe auch um jeweils betragsmäßig gleiche und entgegengesetzt gerichtete Verstellwege verfahren werden, um eine gewünschte Verschwenkbewegung des Schneidkopfes zu bewirken.

Bei einer vorteilhaften Ausgestaltung der Erfindung kann vorgesehen sein, dass ein Verschwenken des Schneidkopfes um eine zweite Achse der Aufhängung des Schneidkopfes durch gleichläufiges Verfahren der Stellantriebe ausführbar ist. Somit ist eine weiter Elementarbewegung des Schneidkopfes durch eine weitere, steuerungstechnisch einfach beherrschbare Bewegung der Stellantriebe ausführbar. Bei dem gleichläufigen Verfahren kann ein Stellantrieb in einem Zeitabschnitt um einen Verstellweg verfahren werden, der verschieden ist von dem Verstellweg des anderen Stellantriebs in diesem Zeitabschnitt und in dieselbe Richtung weist, die Stellantriebe können also um unterschiedliche Verstellwege verfahren werden, um eine gewünschte Verschwenkbewegung des Schneidkopfes zu bewirken. Bei dem gleichläufigen Verfahren können die Stellantriebe auch um jeweils gleiche Verstellwege, die in dieselbe Richtung weisen, verfahren werden, um eine gewünschte Verschwenkbewegung des Schneidkopfes zu bewirken.

Komplexere Bewegungen des Schneidkopfes sind aus diesen Elementarbewegungen zusammensetzbar.

Während des Verschwenkens des Schneidkopfes kann dieser in Betrieb sein, also ein Trenn- oder Schneidverfahren ausführen. Alternativ oder zusätzlich kann vorgesehen sein, dass der Schneidkopf an den Endpunkten der Verschwenkbewegung betrieben wird.

Eine kompakte Bauform des Schneidvorrichtung wird erreicht, wenn die Aufhängung des Schneidkopfes mit einer Befestigung der Stelleinrichtung fest verbunden ist. Über diese Verbindung sind die beim Verfahren der Stellantriebe auf den Schneidkopf eingebrachten Kräfte aufnehmbar.

Bei einer vorteilhaften Ausgestaltung der Erfindung kann vorgesehen sein, dass die Aufhängung des Schneidkopfes bezüglich einer Aufnahme für das Werkstück verfahrbar, insbesondere innerhalb einer gedachten Ebene verfahrbar, ist. Von Vorteil ist dabei, dass die Abmessungen der gefertigten Werkstücke und/oder der bearbeiteten Rohlinge oder Halbzeuge nicht durch den Öffnungswinkel der maximalen Verschwenkbarkeit und den Wirkradius des Schneidkopfes begrenzt sind.

Zur Lösung der Aufgabe ist bei dem Verfahren zur Ansteuerung einer erfindungsgemäßen Schneidvorrichtung vorgesehen, dass zum Ausführen eines Verschwenkens des Schneidkopfes zwei unabhängig voneinander betätigbare Stellantriebe entlang jeweils einer linearen Achse verfahren werden. Es sind somit zur Ausrichtung des Schneidkopfes lineare Stellantriebe einsetzbar, die eine schnelles Verfahren und somit eine schnelle Ausrichtung des Schneidkopfes ermöglichen.

Vorzugsweise kann vorgesehen sein, dass in einer Recheneinheit für eine vorgegebene Winkelausrichtung des Schneidkopfes innerhalb des Raumwinkelbereichs die Verfahrposition auf der jeweiligen linearen Achse der Stelleinrichtungen berechnet wird.

Bei einer vorteilhaften Ausgestaltung des Verfahrens kann vorgesehen sein, dass der Zusammenhang zwischen Verstellweg der Stellantriebe und resultierendem Verschwenkwinkel des Schneidkopfes nichtlinear ist. Von Vorteil ist dabei, dass besondere mechanische Vorrichtungen zur Übersetzung des momentan eingestellten Winkels am Schneidkopf in eine Stellposition, die den Winkel proportional abbildet, verzichtbar sind. Vielmehr ist die Entsprechung von Winkel und Stellposition, die sich aus den geometrischen Eigenschaften der Verbindung zwischen Stellantrieben und Schneidkopf ergeben, in einer Steuereinrichtung als mathematisches Modell hinterlegbar und zur Ansteuerung des Schneidkopfes nutzbar.

Die Erfindung wird nun anhand eines Ausführungsbeispiels näher beschrieben, ist aber nicht auf dieses Ausführungsbeispiel beschränkt. Weitere Ausführungsbeispiele ergeben sich für den Fachmann durch Kombination von Merkmalen des Ausführungsbeispiels untereinander oder mit den Merkmalen der Ansprüche.

### Es zeigt

- Fig. 1: eine erfindungsgemäße Schneidvorrichtung in dreidimensionaler Ansicht,
- Fig. 2: die Schneidvorrichtung gemäß Fig. 1 in Seitenansicht,
- Fig. 3: die Schneidvorrichtung gemäß Fig. 1 in Vorderansicht,
- Fig. 4: die Schneidvorrichtung gemäß Fig. 1 in einer Ansicht von oben,
- Fig. 5: die Schneidvorrichtung gemäß Fig. 1 in einer weiteren Arbeitsposition in dreidimensionaler Ansicht,
- Fig. 6: die Schneidvorrichtung gemäß Fig. 5 in Seitenansicht,
- Fig. 7: die Schneidvorrichtung gemäß Fig. 5 in Vorderansicht,
- Fig. 8: die Schneidvorrichtung gemäß Fig. 5 in einer Ansicht von oben,
- Fig. 9: die Schneidvorrichtung gemäß Fig. 1 in einer dritten Arbeitsposition in dreidimensionaler Ansicht,
- Fig. 10: die Schneidvorrichtung gemäß Fig. 9 in Seitenansicht,
- Fig. 11: die Schneidvorrichtung gemäß Fig. 9 in Vorderansicht,
- Fig. 12: die Schneidvorrichtung gemäß Fig. 9 in einer Ansicht von oben,
- Fig. 13: die Schneidvorrichtung gemäß Fig. 1 in einer vierten Arbeitsposition in dreidimensionaler Ansicht,
- Fig. 14: die Schneidvorrichtung gemäß Fig. 13 in Seitenan- sicht,
- Fig. 15: die Schneidvorrichtung gemäß Fig. 13 in Vorderansicht,
- Fig. 16: die Schneidvorrichtung gemäß Fig. 13 in einer Ansicht von oben,
- Fig. 17: die Schneidvorrichtung gemäß Fig. 1 in einer fünften Arbeitsposition in dreidimensionaler Ansicht und
- Fig. 18: eine weitere erfindungsgemäße Schneidvorrichtung in einer dreidimensionalen Seitenansicht.

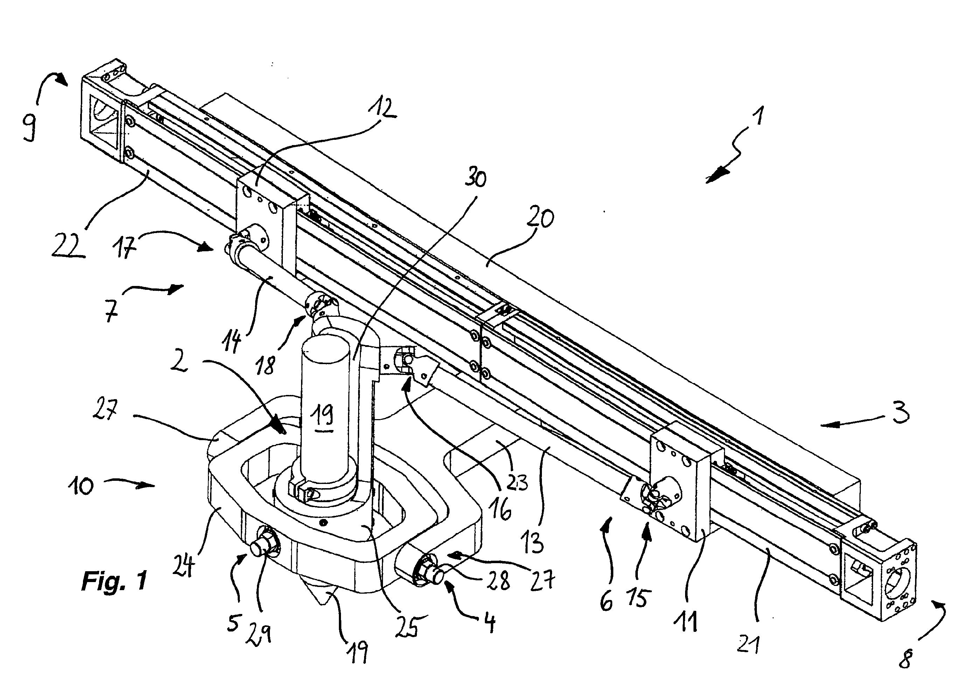

Fig. 1 zeigt eine im ganzen mit 1 bezeichnete Schneidvorrichtung in einer dreidimensionalen Seitenansicht, wobei die übrigen Aufbauten wie Werkstückaufnahme bzw. Werkzeugtisch und Befestigungsrahmen der Schneidmaschine zur Aufnahme der Schneidvorrichtung 1 für eine bessere Übersichtlichkeit weggelassen wurden. Diese sind nach bekannter Art ausgeführt.

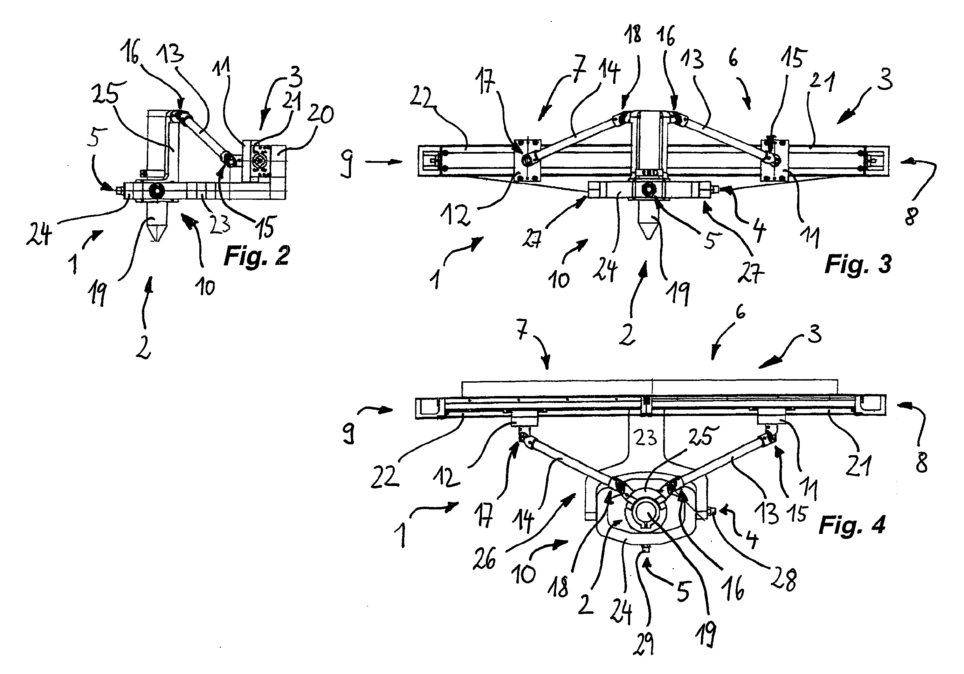

Fig. 2, 3 und 4 zeigen die Schneidvorrichtung 1 in derselben Arbeitsposition von der Seite, von vorn und von oben.

Die Schneidvorrichtung 1 ist insbesondere zum Schneiden von Werkstücken verwendbar, die in Fig. 1 unterhalb der Schneidvorrichtung 1 zur Bearbeitung aufgespannt werden.

Die Werkstücke werden in einer nicht weiter gezeigten Werkstückaufnahme aufgespannt, durch welche eine horizontale Arbeitsfläche ausgezeichnet ist.

Die Schneidvorrichtung 1 hat einen Schneidkopf 2, mit welchem die Trennbearbeitung ausführbar ist. Um weitgehend beliebige Formen aus dem aufgespannten Werkstück schneiden zu können, ist der Schneidkopf 2 innerhalb eines Raumwinkelbereichs frei verschwenkbar. Aus Gründen der Übersichtlichkeit sind die Versorgungsleitungen für den Betrieb des Schneidkopfes 2 nicht weiter dargestellt. Der Schneidkopf 2 ist oberhalb des zur Bearbeitung aufgespannten Werkstücks angeordnet.

Die Arbeitsposition in Fig. 1 bis 4 ist somit durch eine vertikale Ausrichtung des Schneidkopfes 2 charakterisiert.

Eine Stelleinrichtung 3 bewirkt die Einstellung der Ausrichtung der Arbeitsrichtung des Schneidkopfes 2 innerhalb des Raumwinkelbereichs.

Um die Beweglichkeit des Schneidkopfes 2 innerhalb des Raumwinkelbereichs zu ermöglichen, ist der Schneidkopf 2 verschwenkbar aufgehängt.

Die Aufhängung ist durch zwei gekreuzt zueinander verlaufende Achsen 4, 5 gegeben, die jeweils ein Verschwenken des Schneidkopfes 2 um eine dieser Schwenkachsen 4, 5 ermöglichen. Durch eine Kombination dieser Verschwenkungsbewegungen kann ein Verschwenken um eine beliebige andere Schwenkachse, die in der durch die Achsen 4 und 5 aufgespannten, gedachten Ebene liegt, ausgeführt werden.

Die Schwenkachsen 4, 5 definieren eine horizontale Ebene.

Zur Ausführung der Verschwenkbewegungen hat die Stelleinrichtung 3 der Schneidvorrichtung 1 zwei Stellantriebe 6, 7. Diese Stellantriebe 6, 7 sind unabhängig voneinander betätigbar. Der Stellantrieb 6 ist entlang einer linearen Achse 8 geführt verfahrbar, während der Stellantrieb 7 entlang einer linearen Achse 9 verfahrbar ist.

Beide Stellantriebe 6, 7 greifen an dem Schneidkopf 2 an, wodurch ein Verschwenken des Schneidkopfes 2 innerhalb eines Raumwinkelbereichs bewirkt werden kann.

Durch die Achsen 4, 5 sind klassische Gelenke mit genau zwei unabhängigen Freiheitsgraden ausgebildet, in denen der Schneidkopf 2 aufgehängt ist. Die Achse 4 schneidet die Achse 5 im rechten Winkel, und die Achse 5 wird beim Verschwenken um die Achse 4 mitbewegt, so dass insgesamt eine Kardanaufhängung 10 gebildet ist, in welcher der Schneidkopf 2 aufgehängt ist.

Die linearen Achsen 8 und 9 verlaufen geradlinig und sind zueinander parallel ausgerichtet. Wie aus der Fig. 1 ersichtlich ist, sind die Achsen 8 und 9 in dieser Ausführung sogar fluchtend ausgerichtet, liegen also auf einer gemeinsamen, horizontal verlaufenden Gerade.

Jeder Stellantrieb 6, 7 weist einen verfahrbaren Schlitten 11, 12 auf. Schlitten 11 ist entlang der linearen Achse 8 verfahrbar, Schlitten 12 entlang der linearen Achse 9.

Schlitten 11 ist über ein passives Gestänge 13 mit dem Schneidkopf 2 verbunden. Schlitten 12 ist über ein passives Gestänge 14 mit dem Schneidkopf 2 verbunden. Somit greift der Stellantrieb 6 über das längenunveränderliche Gestänge 13 und Stellantrieb 7 über das längenunveränderliche Gestänge 14 an dem Schneidkopf 2 an.

Das Gestänge 13 ist über ein Gelenk 15 an dem Schlitten 11 und über ein Gelenk 16 an dem Schneidkopf 2 angelenkt. Somit ist der Schlitten 11 mit dem Schneidkopf 2 gelenkig verbunden. Ebenso ist der Schlitten 12 über ein Gelenk 17 mit dem Gestänge 14 und dieses über ein Gelenk 18 mit dem Schneidkopf 2 gelenkig verbunden.

Die Gelenke 15, 16, 17 und 18 sind als Kardan- oder Kreuzgelenke ausgeführt, um eine größtmögliche Beweglichkeit der gelenkigen Verbindung zu ermöglichen.

Die Stellantriebe 6 und 7 weisen jeweils einen nicht weiter ersichtlichen elektrischen Antrieb auf, mit dem die Verstellbewegung des jeweiligen Stellantriebs 6 und 7, also die Bewegung des Schlittens 11 bzw. 12, ausführbar ist. Die elektrischen Antriebe werden bei dieser Verstellbewegung nicht mitbewegt, insbesondere ist deren Kabelzuführung also durch diese Verstellbewegungen nicht belastet.

Zusätzlich wird eine eventuell vorhandene Kabelzuführung zu dem Schneidkopf 2 von Versorgungsleitungen für dessen Betrieb nicht auf Torsion belastet, weil der Schneidkopf 2 verschwenkt und nicht um seine durch die Arbeitsrichtung definierte Längsachse gedreht wird.

Zum Ausführen des Trennverfahrens weist der Schneidkopf 2 ein Mittel 19 zum Plasmaschneiden auf. Alternativ oder zusätzlich sind auch Mittel zum Laserschneiden, Wasserstrahlschneiden und/oder mechanischen Schneiden vorhanden, oder das Mittel 19 ist gegen die genannten Mittel austauschbar oder es sind die genannten Mittel in dem Schneidkopf 2 integrierbar oder kombinierbar.

Die Schneidvorrichtung 1 hat weiter eine nicht dargestellte Steuereinheit. Diese Steuereinheit verfügt über eine Recheneinheit zur Berechnung einer Verfahrposition der Stellantriebe 6, 7 für eine vorgegebene Winkelausrichtung des Schneidkopfes 2 innerhalb des Raumwinkelbereichs.

Durch die Kardanaufhängung 10 und die Länge der Verstellwege der Schlitten 11, 12 entlang der Achsen 8, 9 beträgt der Öffnungswinkel des maximal zugänglichen Raumwinkelbereichs wenigstens 90°. Im vorliegenden Fall beträgt der Öffnungswinkel 94°, es sind aber auch größere Öffnungswinkel, beispielsweise 96°, durch Anpassung der Gestänge 13, 14, und der linearen Achsen 8, 9 erreichbar. In der Regel wird der Öffnungswinkel wegen des Platzbedarfs der Kardanaufhängung 10 jedoch kleiner als 180°, beispielsweise kleiner als 110°, sein.

In Ruheposition ist der Schneidkopf 2 in der Mittelachse des Öffnungswinkels angeordnet und ist symmetrisch nach allen Raumrichtungen um denselben maximalen Winkelbetrag verschwenkbar.

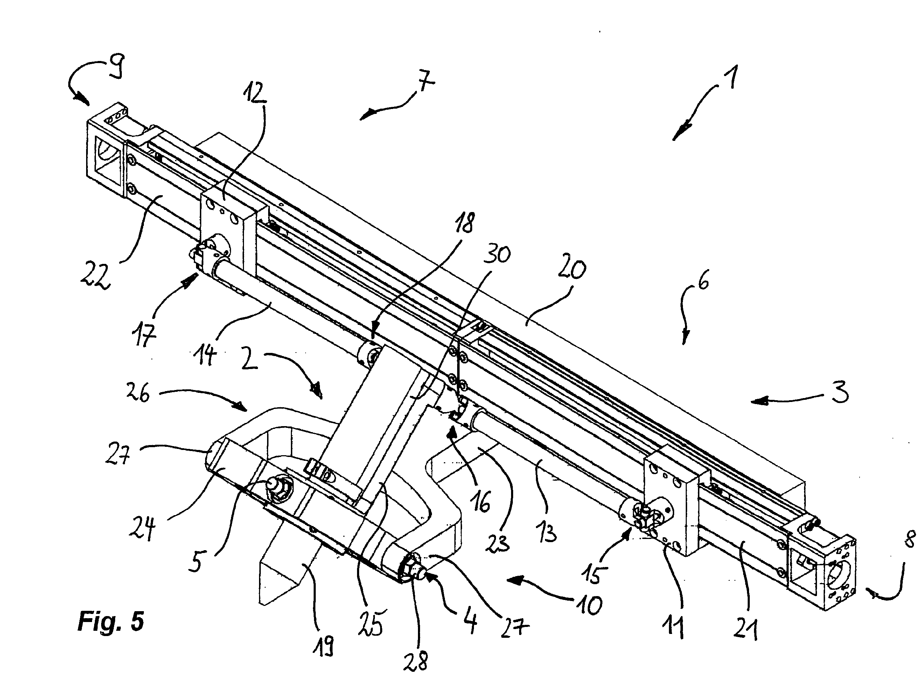

Fig. 5 bis 8 zeigen die Schneidvorrichtung 1 gemäß Fig. 1 bis 4 in einer weiteren Arbeitsposition. Hier und in den folgenden Figuren sind gleiche Bestandteile der Schneidvorrichtung 1 mit gleichen Bezugszeichen bezeichnet und nicht noch einmal gesondert beschrieben.

Diese Arbeitsposition ist durch einen schräg nach vorn ausgerichteten Schneidkopf 2, erkennbar an der Richtung der Spitze des Mittels 19 zum Plasmaschneiden, charakterisiert.

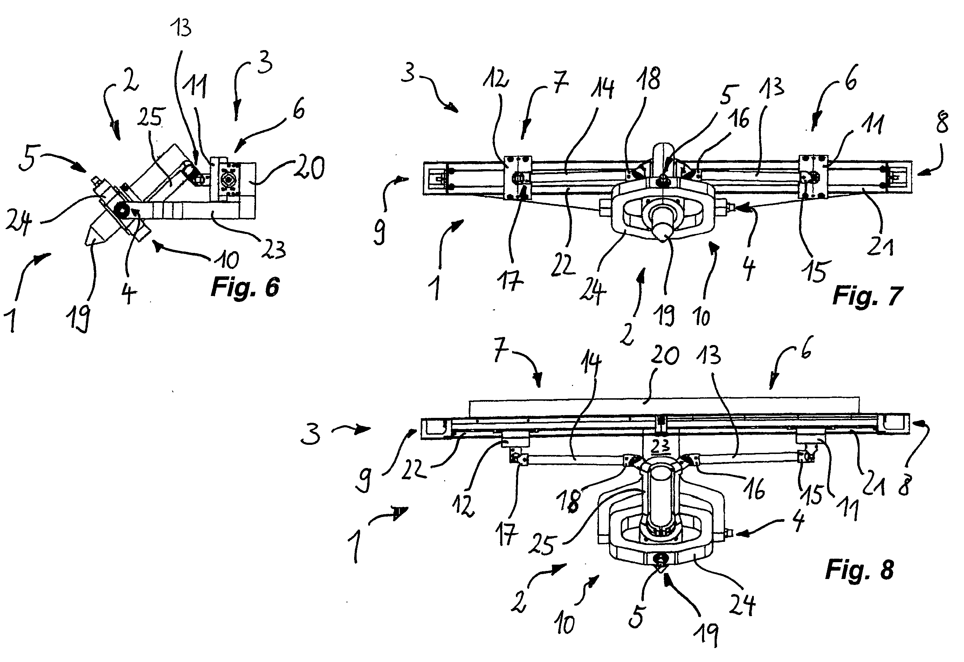

Die Gestänge 13 und 14 sind in dieser Arbeitsposition parallel zu den Achsen 8 und 9 ausgerichtet, wie aus Fig. 7 und 8 ersichtlich ist. Hierzu sind die Schlitten 11 und 12 gegenüber deren Position in Fig. 1 bis 4 gegenläufig, also voneinander weg, verfahren worden. Die gezeigte Arbeitsposition stellt somit die maximale Neigung des Schneidkopfes 2 nach vorn dar und definiert somit die Begrenzung des zugänglichen Raumwinkelbereichs, also den Öffnungswinkel, nach einer Richtung.

Aus den Fig. 1 bis 8 ist anhand der Positionsänderungen der Gestänge 13 und 14 ersichtlich, dass ein Verschwenken des Schneidkopfes 2 um die Achse 4 der Kardanaufhängung 10 des Schneidkopfes 2 durch gegenläufiges Verfahren der Stellantriebe 6, 7 und damit der Schlitten voneinander weg oder aufeinander zu ausführbar ist.

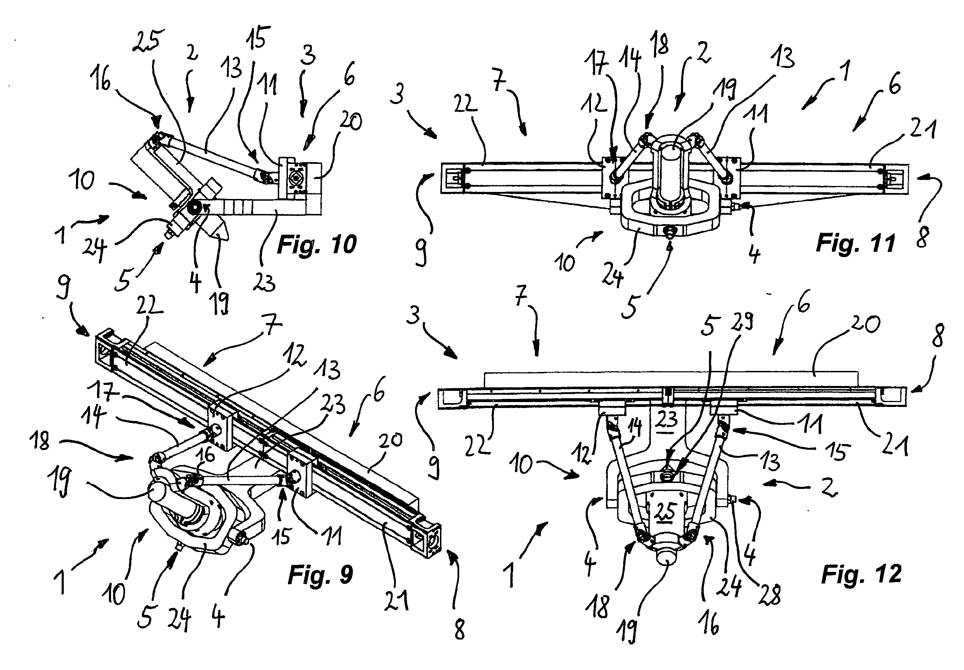

Fig. 9 bis 12 zeigen die Schneidvorrichtung 1 gemäß Fig. 1 bis 4 in einer weiteren Arbeitsposition.

Um dieses Arbeitsposition des Schneidkopfes 2 zu erreichen, wurden die Schlitten 11 und 12 aufeinander zu verfahren. Die Schlitten 11 und 12 sind in der gezeigten Verstellposition am inneren Ende des Verfahrwegs der linearen Achsen 8 bzw. 9 angekommen. Somit wird durch die resultierende Neigung des Schneidkopfes 2 nach hinten der zugängliche Raumwinkelbereich in dieser Richtung definiert.

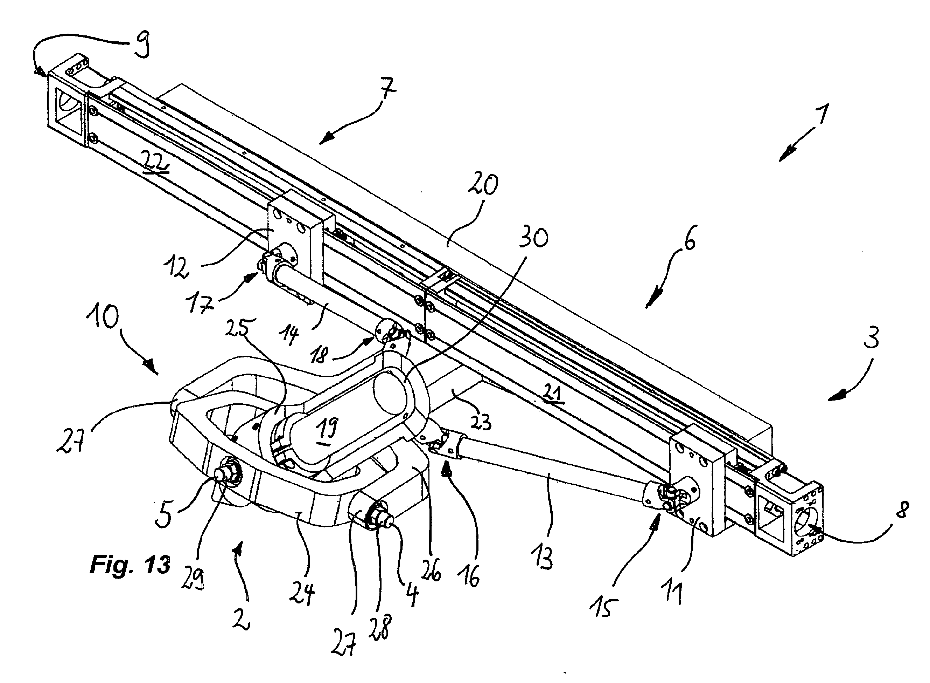

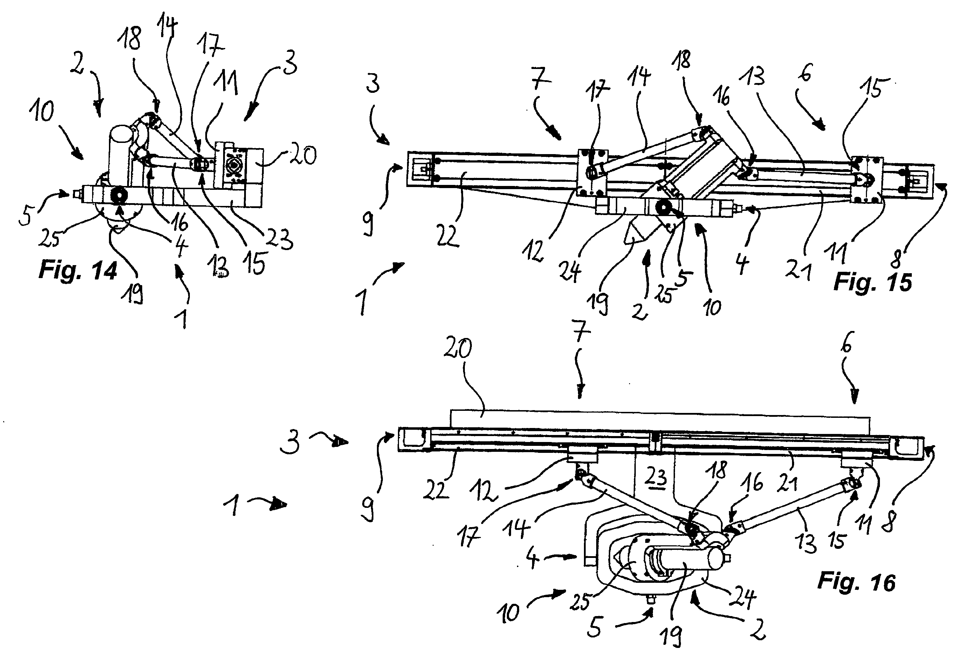

Fig. 13 bis 16 zeigen die Schneidvorrichtung 1 gemäß Fig. 1 bis 4 in einer vierten Arbeitsposition.

Um in diese Arbeitsposition zu gelangen, wurden die Schlitten 11 und 12 gleichläufig, also in dieselbe Richtung, verfahren. Der Schlitten 11 ist somit an das äußere Ende des Verfahrwegs der linearen Achse 8 verfahren worden, während der Schlitten 12 am inneren Ende des Verfahrwegs der linearen Achse 9 ist. Hieraus ergibt sich eine maximale seitliche Neigung des Schneidkopfes 2, durch die der zugängliche Raumwinkelbereich in diese Richtung definiert wird.

Es ist ersichtlich, dass ein Verschwenken des Schneidkopfes 2 um die Achse 5 der Aufhängung 10 des Schneidkopfes 2 durch gleichläufiges Verfahren der Stellantriebe 6 und 7, also Verfahren der Schlitten 11 und 12 in dieselbe Richtung, ausführbar ist. Der Schneidkopf wird hierdurch in einer Ebene verschwenkt, die senkrecht auf der Achse 5 steht.

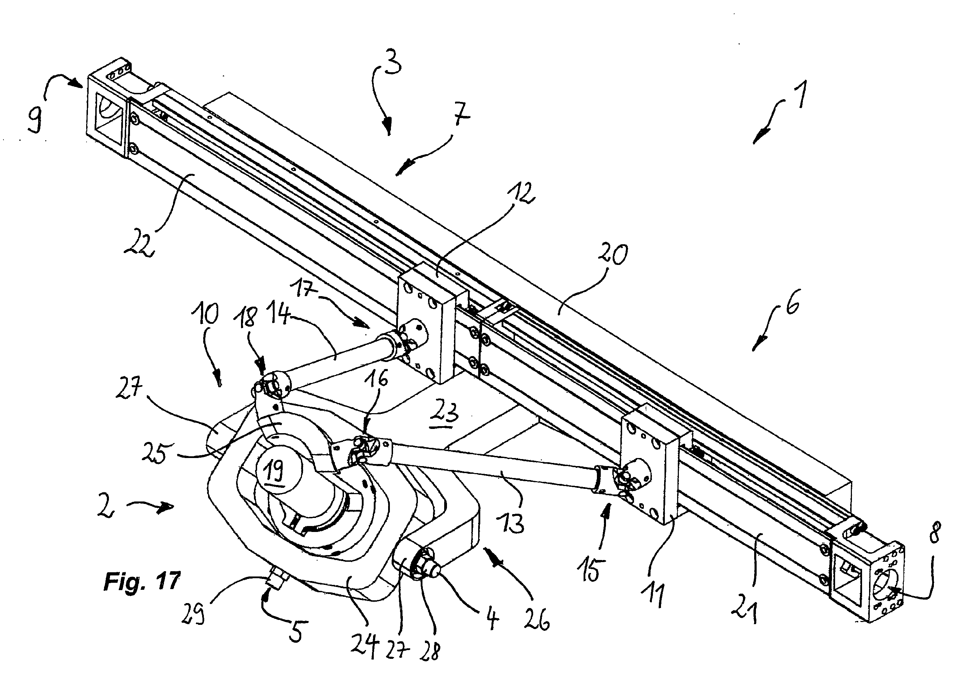

Es ist aus Fig. 17 ersichtlich, dass durch Kombination von gegenläufigem und gleichläufigem Verfahren der Schlitten 11 und 12 beliebige Schrägstellungen und Verschwenkbewegungen des Schneidkopfes 2 innerhalb des zugänglichen Raumwinkelbereichs einstellbar bzw. ausführbar sind. In der in Fig. 17 gezeigten Arbeitsposition ist beispielsweise der Schlitten 12 am inneren Ende des Verfahrwegs der linearen Achse 9 angeordnet, während der Schlitten 11 in der Mitte des Verfahrwegs der linearen Achse 8 angeordnet ist. Hieraus resultiert eine durch die Gestänge 13 und 14 erzwungene Arbeitsrichtung schräg nach hinten und schräg nach links unten des Schneidkopfes 2.

Der Schneidkopf 2 ist während der Verschwenkbewegung und/oder an den Endpunkten der Verschwenkbewegung betreibbar.

Die Stellantriebe 6 und 7 sind an einer gemeinsamen Befestigung 20 fixiert. Die Kardanaufhängung 10 des Schneidkopfes 2 ist mit der Befestigung 20 der Stelleinrichtung 3 fest verbunden. Diese Verbindung wird durch eine Aufnahme 23 bewirkt.

Die Aufnahme 23 mündet in eine gabelförmige Aufhängung 26, an deren Enden 27 das Gelenk der Achse 4 angeordnet ist. Dieses Gelenk der Achse 4 ist auf zwei Seiten mit einem ringförmigen Einsatz 24 verbunden, an welchem das Gelenk für die Achse 5 ausgebildet ist. An dem ringförmigen Einsatz 24 sind somit auf zwei gegenüberliegenden Seiten Zapfen 28 ausgeformt, die in Drehlager greifen, die an den Enden 27 der gabelförmigen Aufhängung 26 ausgebildet sind. Somit ist das Gelenk der Achse 4 gebildet. Gleichermaßen sind an zwei gegenüberliegenden Seiten der Halterung 25 zwei Zapfen 29 angeordnet, die in Drehlager eingreifen, welche an dem ringförmigen Einsatz 24 ausgebildet sind. Somit ist das Gelenk der Achse 5 gebildet. Die Halterung 25 des Mittels 19 ist also an zwei Seiten mit diesem Gelenk für die Achse 5 verbunden, so dass insgesamt eine Kardanaufhängung 10 für die Halterung 25 ausgebildet ist. Die Gelenke sind als Drehgelenke ausgeführt. Die Gestänge 13, 14 sind an der Halterung 25 angelenkt.

Die Aufnahme 23 mit der gabelförmigen Aufhängung 26 steht von einer vertikalen Ebene, in welcher die linearen Achsen 8, 9 verlaufen, in einem Winkel ab und ist horizontal ausgerichtet.

Die Halterung 25 weist eine in Fig. 1 vertikal orientierte, rinnenförmige Aufnahme 30 für das Mittel 19 und/oder ein Mittel zum Wasserstrahlschneiden, Laserschneiden und/oder mechanischen Schneiden auf, in die das jeweilige Mittel eingelegt werden kann.

Es ist in den Figuren nicht dargestellt, dass die Schneidvorrichtung 1 mit der Kardanaufhängung 10 des Schneidkopfes 2 bezüglich einer Aufnahme oder Aufspannvorrichtung für das Werkstück verfahrbar ist. Dieses Verfahren ist in einer gedachten Ebene, die in den Figuren horizontal ausgerichtet ist, ausführbar, um alle Bereiche eines aufgespannten Werkstücks zu erreichen. Diese Verfahrebene ist somit auf die Oberfläche des aufgespannten Werkstücks ausgerichtet.

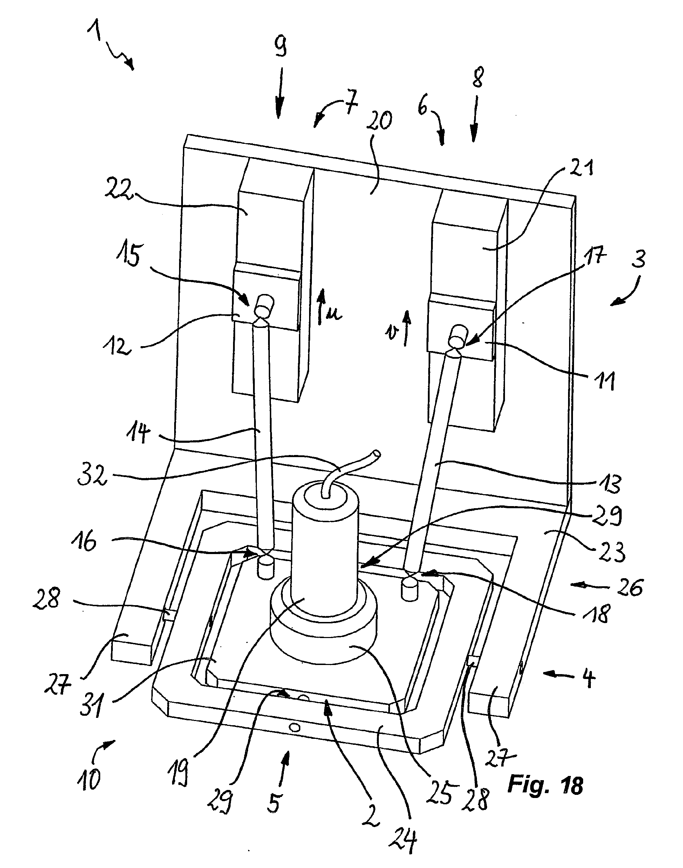

Die in Fig. 18 in einer dreidimensionalen Seitenansicht gezeigte Schneidvorrichtung 1 hat - wie die Schneidvorrichtung gemäß Fig. 1 bis 17 - einen innerhalb eines Raumwinkelbereichs verschwenkbaren Schneidkopf 2. In Fig. 18 sind Teile, die funktional gleich oder identisch zu Teilen der Schneidvorrichtung nach Fig. 1 bis 17 ausgebildet sind, mit denselben Bezugszeichen wir in Fig. 1 bis 17 gekennzeichnet. Die Ausführungen zum zuvor beschrieben Ausführungsbeispiel gelten somit hier entsprechend.

Der Schneidkopf 2 ist über zwei rechtwinklig zueinander ausgerichtete und in einer horizontalen Ebene verlaufende Achsen 4, 5 in einer gabelförmigen Aufhängung 26 einer Aufnahme 23 aufgehängt.

Somit ist eine Kardanaufhängung 10 gebildet, die eine freie Ausrichtung der Arbeitsrichtung des Schneidkopfes 2 innerhalb des Raumwinkelbereichs erlaubt, indem der Schneidkopf 2 in genau zwei unabhängigen Freiheitsgraden verschwenkbar ist. Die Kardanaufhängung 10 hat somit einen Ring 24 mit quadratischer Grundform und abgestumpften Ecken, der über Zapfen 28 in den Enden 27 der gabelförmigen Aufhängung 26 verschwenkbar um die Achse 4 gelagert ist. In den Ring 24 ist die Platte 31 eingesetzt und über Zapfen 29 in dem Ring 24 verschwenkbar um die Achse 5 gelagert.

Der Schneidkopf 2 trägt auf der Platte 31, an die eine als Hülse geformte Halterung 25 angeformt ist, ein in diese Halterung 25 eingesetztes Mittel zum Schneiden 19. Die hülsenförmige Halterung 25 bildet somit eine Aufnahme 30 für das Mittel zum Schneiden 19.
An dem Mittel zum Schneiden 19 ist ein Kabel 31 zur Zuführung eines Betriebsmittels und von Energie zu dem Mittel zum Schneiden 19 zum Betrieb des Schneidkopfes 2 angedeutet.

An die Platte 31 greifen über Gelenke 16, 18 Stangen 13, 14 an, die an ihren jeweils von der Platte 31 abstehenden Enden über Gelenke 15, 17 an jeweils einem Schlitten 11, 1 2 angelenkt sind.

Die Schlitten 11, 12 sind auf geradlinigen Schienen 21, 22 verfahrbar und können durch Stellantriebe 6, 7 entlang der durch die Schienen 21, 22 vorgegeben linearen Achsen unabhängig verstellt werden. Somit ist eine Stelleinrichtung 3 für die Ausrichtung des Schneidkopfes 2 gebildet.

Durch ein gleichläufiges Verfahren der Stellantriebe 6, 7, welches durch die Pfeile u, v in Fig. 8 angedeutet wird, wird der Schneidkopf 2 um die Achse 4 verschwenkt. Durch ein gegenläufiges Verfahren der Stellantriebe 6, 7, bei welchem der Verstellweg des Schlittens 11, 12 an einem Stellantrieb 6, 7 in Richtung des jeweiligen Pfeils u, v, an dem anderen Stellantrieb 6, 7 entgegen der Richtung des jeweiligen Pfeils u, v gerichtet ist, wird ein Verschwenken des Schneidkopfes 2 mit der Platte 31 um die Achse 5 bewirkt. Die Ansteuerung und Bewirkung der Verschwenkbewegung erfolgt wie im vorhergehenden Ausführungsbeispiel beschrieben.

Die linearen Achsen 8, 9 sind in der in Fig. 18 dargestellten Gebrauchsstellung der Schneidvorrichtung 1 vertikal ausgerichtet und liegen in einer gemeinsamen Ebene. Diese Ebene ist parallel zu der als Platte ausgebildeten Befestigung 20 der Stelleinrichtung.

Die linearen Achsen 8, 9 sind somit parallel zu der Mittelachse des sich in Fig. 18 nach unten öffnenden Raumwinkelbereichs und folglich parallel zu der Arbeitsrichtung des Schneidkopfes 2 in dessen Mittelstellung bezüglich der Verschwenkbarkeit ausgerichtet.

Winklig zu der durch die linearen Achsen 8, 9 definierten Ebene steht in einem Winkel die Aufnahme 23 von dieser Ebene ab und ragt so nach vorn über die Stelleinrichtung 3 hervor. Die durch die Aufnahme 23 vorgegebene Ebene und die durch die plattenförmige Befestigung 20 beschriebene Ebene schließen somit einen rechten Winkel ein.

Durch das Abstehen der Aufnahme 23 der Kardanaufhängung 10 gegenüber der Befestigung 20 verlaufen die Stangen 13, 14 in allen Verstellpositionen schräg zur horizontalen und zur vertikalen Richtung.

Zur Ausführung des erfindungsgemäßen Verfahrens zur Ansteuerung der Schneidvorrichtung 1 wird in der nicht weiter dargestellten Steuer- und Recheneinheit für eine gewünschte Winkelausrichtung des Schneidkopfes 2 innerhalb des Raumwinkelbereichs die Verfahrposition der Schlitten 11, 12 auf der jeweiligen linearen Achse 8, 9 der Stellantriebe 6, 7 berechnet.

Der Zusammenhang zwischen Verstellweg der Stellantriebe 6, 7, also der Verstellpositionen der Schlitten 11 und 12, und resultierendem Verschwenkwinkel des Schneidkopfes 2 ist nichtlinear. Dieser Zusammenhang ist in einer Tabelle oder als formelmäßige Abhängigkeit in der Recheneinheit hinterlegt.

Bei der Schneidvorrichtung 1 ist ein Schneidkopf 2 in einer Gelenkaufhängung 10 mit zwei gekreuzten oder windschiefen Drehachsen 4 und 5 verschwenkbar aufgehängt. An den Schneidkopf 2 greifen über Gestänge 13 und 14 zwei Stellantriebe 6 und 7 an, die entlang von vorzugsweise horizontal oder vertikal oder schräg ausgerichteten linearen Achsen 8 und 9 verfahrbar sind. Durch die linearen Verstellbewegungen der Stellantriebe 6 und 7 sind die Verschwenkbewegungen um die Achsen 4 und 5 ausführbar und ansteuerbar. Der Schneidkopf 2 hat Mittel 19 zum Plasmaschneiden und/oder Laserschneiden und/oder Wasserstrahlschneiden und/oder mechanischem Schneiden.

## Patentansprüche

1. Schneidvorrichtung, insbesondere zum Schneiden von Werkstücken, mit einem innerhalb eines Raumwinkelbereichs frei verschwenkbaren Schneidkopf (2) und einer Stelleinrichtung (3), mit welcher die Ausrichtung der Arbeitsrichtung des Schneidkopfes (2) innerhalb des Raumwinkelbereichs einstellbar ist, **dadurch gekennzeichnet, dass** der Schneidkopf (2) verschwenkbar aufgehängt ist, wobei das Verschwenken um zwei gekreuzt oder windschief zueinander verlaufende Achsen (4, 5) ausführbar ist, und dass die Stelleinrichtung (3) wenigstens zwei unabhängig voneinander betätigbare Stellantriebe (6, 7) aufweist, die jeweils entlang einer linearen Achse (8, 9) verfahrbar sind und die jeweils an dem Schneidkopf (2) zur Verschwenkung des Schneidkopfes (2) angreifen.

2. Schneidvorrichtung nach Anspruch 1, **dadurch gekennzeichnet, dass** der Schneidkopf (2) in einem klassischen Gelenk, beispielsweise in einer Kardanaufhängung (10), aufgehängt ist.

3. Schneidvorrichtung nach Anspruch 1 oder 2, **dadurch gekennzeichnet, dass** die linearen Achsen (8, 9) geradlinig verlaufen und/oder dass die linearen Achsen (8, 9) der Stellantriebe zueinander parallel und/oder nebeneinander und/oder schräg zueinander ausgerichtet sind und/oder dass die linearen Achsen (8, 9) in einer gemeinsamen Ebene angeordnet sind.

4. Schneidvorrichtung nach einem der Ansprüche 1 bis 3, **dadurch gekennzeichnet, dass** die durch die Achsen (4, 5) der Aufhängung des Schneidkopfes (2) beschriebene Ebene in Gebrauchsstellung der Schneidvorrichtung (1) horizontal ausgerichtet ist.

5. Schneidvorrichtung nach einem der Ansprüche 1 bis 4, **dadurch gekennzeichnet, dass** die linearen Achsen (8, 9) in Gebrauchsstellung der Schneidvorrichtung (1) mit einer Horizontalebene jeweils einen Winkel einschließen und/oder dass die linearen Achsen (8, 9) in Gebrauchsstellung der Schneidvorrichtung (1) vertikal ausgerichtet sind.

6. Schneidvorrichtung nach einem der Ansprüche 1 bis 5, **dadurch gekennzeichnet, dass** die linearen Achsen (8, 9) in einem spitzen Winkel oder parallel zu der Arbeitsrichtung des Schneidkopfes (2) in dessen Mittelstellung bezüglich der Verschwenkbarkeit ausgerichtet sind und/oder dass die linearen Achsen (8, 9) in einem spitzen Winkel oder parallel zu der Mittelachse des Raumwinkelbereichs ausgerichtet sind.

7. Schneidvorrichtung nach einem der Ansprüche 1 bis 6, **dadurch gekennzeichnet, dass** der Schneidkopf (2) in einer vorzugsweise gabelförmigen Aufnahme (23) aufgehängt ist, welche gegenüber der durch die linearen Achsen (8, 9) beschriebenen Ebene in einem Winkel, vorzugsweise in einem rechten Winkel, absteht.

8. Schneidvorrichtung nach einem der Ansprüche 1 bis 7, **dadurch gekennzeichnet, dass** jeder Stellantrieb (6, 7) einen entlang der linearen Achse (8, 9) verfahrbaren Schlitten (11, 12) aufweist und/oder dass jeder Schlitten (11, 12) über ein vorzugsweise längenfestes Gestänge (13, 14) mit dem Schneidkopf (2) gelenkig verbunden ist.

9. Schneidvorrichtung nach einem der Ansprüche 1 bis 8, **dadurch gekennzeichnet, dass** die Stellantriebe (6, 7) jeweils einen elektrischen Antrieb aufweisen.

10. Schneidvorrichtung nach einem der Ansprüche 1 bis 9, **dadurch gekennzeichnet, dass** der Schneidkopf (2) wenigstens ein Mittel (19) zum Plasmaschneiden, Laserschneiden, Wasserstrahlschneiden und/oder mechanischen Schneiden aufweist.

11. Schneidvorrichtung nach einem der Ansprüche 1 bis 10, **dadurch gekennzeichnet, dass** eine Steuereinheit vorhanden ist, die zur Berechnung einer Verfahrposition der Stellantriebe (6, 7) für eine vorgegebene Winkelausrichtung des Schneidkopfes (2) innerhalb des Raumwinkelbereichs ausgebildet ist und/oder dass der Öffnungswinkel des Raumwinkelbereichs wenigstens 90° beträgt und/oder dass der Schneidkopf (2) in Ruheposition in der Mittelachse des Öffnungswinkels angeordnet ist.

12. Schneidvorrichtung nach einem der Ansprüche 1 bis 11, **dadurch gekennzeichnet, dass** ein Verschwenken des Schneidkopfes (2) um eine erste Achse (4) der Aufhängung (10) des Schneidkopfes (2) durch gegenläufiges Verfahren der Stellantriebe (6, 7) ausführbar ist und/oder dass ein Verschwenken des Schneidkopfes (2) um eine zweite Achse (5) der Aufhängung (10) des Schneidkopfes (2) durch gleichläufiges Verfahren der Stellantriebe (6, 7) ausführbar ist.

13. Schneidvorrichtung nach einem der Ansprüche 1 bis 12, **dadurch gekennzeichnet, dass** die Aufhängung (10) des Schneidkopfes (2) mit einer Befestigung (20) der Stelleinrichtung (3) fest verbunden ist und/oder dass die Aufhängung (10) des Schneidkopfes (2) bezüglich einer Aufnahme für das Werkstück verfahrbar, insbesondere innerhalb einer gedachten Ebene verfahrbar, ist.

14. Verfahren zur Ansteuerung einer Schneidvorrichtung, wobei die Schneidvorrichtung (1) nach einem der vorangehenden Ansprüche ausgebildet ist, **dadurch gekennzeichnet, dass** zum Ausführen eines Verschwenkens des Schneidkopfes (2) die zwei unabhängig voneinander betätigbaren Stellantriebe (6, 7) entlang jeweils der zugehörigen linearen Achse (8, 9) verfahren werden.

15. Verfahren nach dem vorangegangenen Anspruch, **dadurch gekennzeichnet, dass** in einer Recheneinheit für eine vorgegebene Winkelausrichtung des Schneidkopfes (2) innerhalb des Raumwinkelbereichs die Verfahrposition auf der jeweiligen linearen Achse (8, 9) der Stellantriebe (6, 7) berechnet wird und/oder dass der Zusammenhang zwischen Verstellweg der Stellantriebe (6, 7) und resultierendem Verschwenkwinkel des Schneidkopfes (2) nichtlinear ist.
